**Europäisches Patentamt**

**European Patent Office**

**Office européen des brevets**

(11) Veröffentlichungsnummer: **0 097 826**
**B1**

(12) **EUROPÄISCHE PATENTSCHRIFT**

(45) Veröffentlichungstag der Patentschrift:
16.08.89

(51) Int. Cl.⁴: **F 02 P 5/04**

(21) Anmeldenummer: 83105371.5

(22) Anmeldetag: 31.05.83

(54) Verfahren zur Steuerung eines Mikrorechners.

(30) Priorität: 28.06.82 DE 3224030

(43) Veröffentlichungstag der Anmeldung:
11.01.84 Patentblatt 84/2

(45) Bekanntmachung des Hinweises auf die Patenterteilung:
16.08.89 Patentblatt 89/33

(84) Benannte Vertragsstaaten:
DE FR GB

(56) Entgegenhaltungen:
DE-A- 2 850 534
FR-A- 2 171 626
FR-A- 2 398 338
FR-A- 2 476 756
GB-A- 2 031 185
US-A- 4 273 089
US-A- 4 355 360

(73) Patentinhaber: ROBERT BOSCH GMBH, Postfach 50,
D-7000 Stuttgart 1 (DE)

(72) Erfinder: Bonitz, Jörg, Dipl.-Ing, Marsstrasse 19,
D-7130 Mühlacker (DE)
Erfinder: Entenmann, Robert, Beihingerweg 15,
D-7141 Benningen (DE)
Erfinder: Knab, Rochus, Danneckerstrasse 10,
D-7014 Kornwestheim (DE)
Erfinder: Miller, Bernhard, Lehenstrasse 31,
D-7000 Stuttgart 1 (DE)
Erfinder: Rohde, Siegfried, Dr.-Ing., Memelweg 1,
D-7141 Schwieberdingen (DE)
Erfinder: Viess, Walter, Schützinger Strasse 54,
D-7132 Illingen (DE)
Erfinder: Schramm, Herbert, Dr.-Ing., Im Götzen 25,
D-7000 Stuttgart 1 (DE)

ACTORUM AG

**Beschreibung**

Stand der Technik

Die Erfindung geht aus von einem Verfahren zur Steuerung einer Brennkraftmaschine mit einem Mikrorechner nach der Gattung des Hauptanspruchs. Mikrorechner sind heute vielfach in sehr komplexen Steuergeräten eingesetzt, wo sie eine Vielzahl von Funktionen zu erfüllen haben. So ist beispielsweise ein Mikrorechner zur gleichzeitigen Steuerung von Zündung und Einspritzung aus der DE-OS-2 850 534 bekannt. Wenn verschiedene Ausgangssignale erzeugt werden müssen und gegebenenfalls noch verschiedene Eingangsgrößen zu erfassen sind, wird die Steuerung des Mikrorechners vor allem dann sehr problematisch, wenn diese verschiedenen Vorgänge sich unregelmäßig überschneiden. Es ist dann sehr schwierig festzulegen, welche Operation als nächste durchgeführt werden soll, vor allem dann, wenn die Reihenfolge nicht immer die selbe ist. Um dieses Problem zu lösen ist es aus dem angegebenen Stand der Technik bekannt, verschiedene Funktionen, insbesondere Zählfunktionen aus dem Mikrorechner in einen zugeordneten Eingangs-/Ausgangskreis auszulagern. Diese Lösung erfordert jedoch einen sehr aufwendigen Eingangs-/Ausgangskreis, der mit einer Vielzahl von Zählern ausgestattet sein muß. Darüber hinaus ist eine spezielle Anpassung an die jeweils vorgesehenen Steuerfunktionen und zu erfassenden Daten erforderlich. Dies macht die Anordnung aufwendig und teuer. Weiterhin ist aus der GB-A-2 031 185 eine Steuerung für eine Brennkraftmaschine bekannt geworden, die neben einem Mikrorechner auch Register aufweist, die dekrementierbar oder inkrementierbar sind. Diese Register können auch zur Ablage von vom Mikrorechner ermittelten Daten dienen. Die dort beschriebenen Register dienen der Zwischenspeicherung der vom Rechner verarbeiteten Daten. Die US-A-4 355 360 zeigt und beschreibt eine rechnergesteuerte Zündanlage, die eine relativ komplexe Interrupt-Steuerung aufweist, damit der Mikroprozessor in die Lage versetzt wird, die unterschiedlichen Eingangsgrößen des Fahrzeuges und die Ausgangsgrößen zur Steuerung der Brennkraftmaschine zu verarbeiten.

Vorteile der Erfindung

Das erfindungsgemäße Verfahren mit den kennzeichnenden Merkmalen des Hauptanspruches hat demgegenüber den Vorteil, daß eine Vielzahl von unregelmäßig sich überschneidenden Vorgängen im Mikrorechner selbst gesteuert bzw. erfaßt werden können. Dazu wird lediglich ein einfacher Zeittakt benötigt, der gleichzeitig zur Steuerung bzw. Erfassung von Signalen benutzt wird. Es können dadurch gleichzeitig mehrere Zeiten in den Registern ausgezählt werden und gemäß einer Weiterbildung der Erfindung auch die Zeitdauer von Vorgängen und Eingangsgrößen erfaßt werden. Die Auszählungen zur Feststellung von Steuerzeiten oder zur Erfassung von Eingangsgrößen können sich dabei beliebig überschneiden. Auch Asynchronvorgänge sind dabei leicht realisierbar. Diese Zeitauszählungen sind in zeitlich großem Bereich möglich, insbesondere wenn maschinenparameterabhängig die Taktfrequenz verändert wird. Im gesamten Arbeitsbereich der Brennkraftmaschine ist daher eine einfache Umrechnung mit lediglich einem Byte möglich, da keine Kenntnisse der absoluten Periodendauer, z.B. der Drehzahl, erforderlich ist.

Durch die in den weiteren Unteransprüchen aufgeführten Maßnahmen sind vorteilhafte Weiterbildungen und Verbesserungen des im Hauptanspruch angegebenen Verfahrens möglich.

Zeichnung

Ein Ausführungsbeispiel der Erfindung ist in der Zeichnung dargestellt und in der nachfolgenden Beschreibung näher erläutert. Es zeigen Figur 1 eine schaltungsmäßige Teildarstellung eines Mikroprozessors, Figur 2 ein Signaldiagramm zur Darstellung von Eingangs- und Ausgangssignalen, Figur 3 ein Signaldiagramm zur zeitlichen Darstellung der Interrupt-Vorgänge und Figur 4 ein Flußdiagramm zur Erläuterung der Wirkungsweise.

Beschreibung des Ausführungsbeispiels

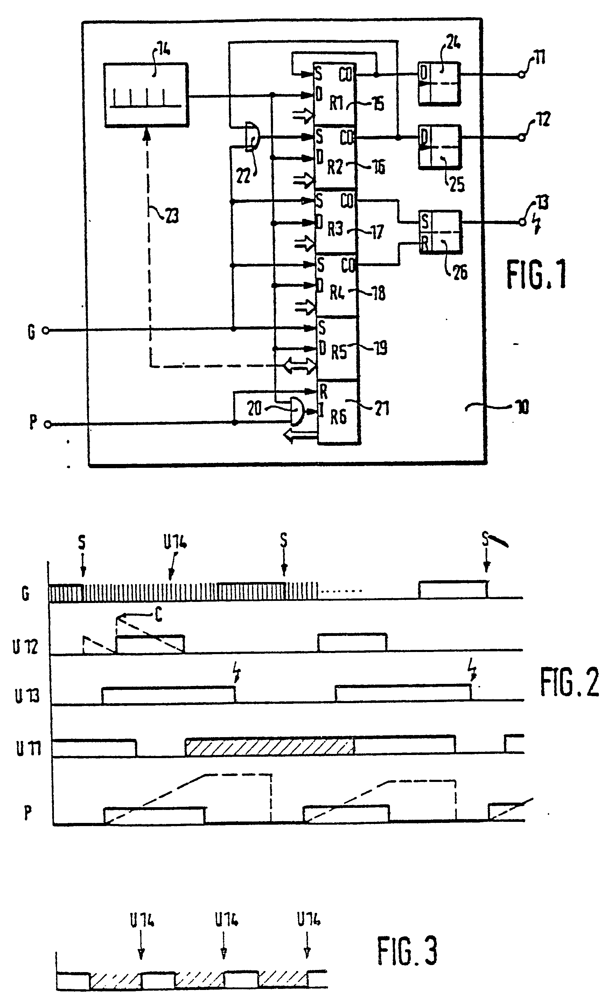

In Figur 1 ist ein Mikroprozessor 10 bzw. Mikrorechner dargestellt, dem zwei Eingangsgrößen G und P zugeführt sind und der drei an den Ausgangsklemmen 11 bis 13 abgreifbare Ausgangssignalfolgen erzeugt. Zur Vereinfachung der Darstellung sind nur diejenigen Baugruppen des Mikroprozessors 10 dargestellt, die zur Erläuterung der Funktion wesentlich und nützlich sind. Nicht dargestellt sind z.B. die zentrale Recheneinheit, die Arbeits- und Festwertspeicher, das Programmsteuerwerk und sonstige für die Funktion eines Mikrorechners unbedingt notwendige Baugruppen. Ein prinzipieller Aufbau eines Mikroprozessors bzw. Mikrorechners mit all seinen Bestandteilen kann aus jedem Datenbuch eines Mikrorechner-Herstellers entnommen werden. Dort ist auch die Funktion und das Zusammenwirken, sowie die notwendige Programmierung ausführlich erläutert.

Die dargestellten Baugruppen sind ein Zeittaktgeber 14, dessen Ausgang mit Abwärtszähleingängen D (Dekrementiereingängen) von fünf Registern 15 bis 19 verbunden ist. Diese Register sind auch als $R_1$ bis $R_5$ bezeichnet. Die Ausgangssignale dieses Zeittaktgebers 14 und die Eingangssignale P weisen eine UND-Verknüpfung auf, die als UND-Gatter 20 dargestellt ist. Der Ausgang dieses UND-Gatters 20 ist mit dem Aufwärtszähleingang I (Inkrementiereingang) eines weiteren Registers 21 verbunden, das mit $R_6$ bezeichnet ist. Das Eingangssignal G ist den Setzeingängen S der Register 16 bis 19 zugeführt. Dabei kann der Setzeingang des Registers 16 zusätzlich über den Überlaufausgang CO dieses Registers betätigt werden, was durch ein ODER-Gatter 22 dargestellt ist. Der Überlaufausgang CO des Registers 15 ist mit dem Setzeingang S dieses Registers verbunden. Das Eingangssignal P ist weiterhin dem Rücksetzeingang R des Registers 21 zugeführt. Die vom Mikroprozessor 10 gesteuerte Datenzufuhr und Entnahme zu bzw. aus den Registern 15 bis 21 ist durch entsprechende Pfeile dargestellt. Dabei ist durch eine unterbrochene Linie 23 die Beeinflussung des Zeittaktgebers 14 durch die Daten des Registers 19 dargestellt. Die Überlaufausgänge CO der beiden Register 15 und 16 sind über je ein D-Flip-Flop 24, 25 mit den Ausgangsklemmen 11, 12 verbunden. Die Überlaufausgänge CO der beiden Register 17 und 18 sind mit dem Setz- bzw- Rücksetzeingang eines Flip-Flops 26 verbunden, dessen Ausgang an die Klemme 13 angeschlossen ist.

Es sei noch festgestellt, daß die dargestellten Verbindungsleitungen, logischen Verknüpfungen und Flip-Flops in einem Mikrorechner gewöhnlich als Funktionen realisiert sind und die tatsächlichen Verbindungen wenigstens teilweise durch Busleitungen hergestellt sind. Zur Erläuterung der Wirkungsweise hat sich jedoch die gewählte Darstellung als vorteilhaft erwiesen.

In Figur 2 sind die sich unregelmäßig überschneidenden Eingangs- und Ausgangssignale dargestellt. Dabei dient das Signal G als Bezugsmarke, ab dessen Rückflanke durch Setzen der Register 16 bis 19 ein Arbeitszyklus eingeleitet wird. Die Eingangsgröße P soll durch den Mikroprozessor 10 in ihrer zeitlichen Länge erfaßt werden. Die erzeugten Ausgangssignale $U_{11}$ bis $U_{13}$ sind für das hier gewählte Beispiel einer Zündanlage einer Brennkraftmaschine: $U_{11}$ eine impulspausengesteuerte, asynchrone Ausgangssignalfolge zur Turbosteuerung, $U_{12}$ ein kurbelwinkelfestes Meßfenster für eine Klopfregelung und $U_{13}$ ein Steuersignal für eine Zündspule einer Zündanlage. Natürlich können diese sich drehzahlabhängig überschneidenden Signale je nach Bedarf auch für andere Zwecke verwendet werden. Die Erzeugung der Ausgangsgrößen $U_{11}$ bis $U_{13}$ sowie die Erfassung der Eingangsgröße P soll dabei durch einen einzigen Mikrorechner realisiert werden. Die Dekrementierung bzw. Inkrementierung der Register 15 bis 21 erfolgt im Takt des Ausgangssignale $U_{14}$ des Zeittaktgebers 14. Dieser Zeittakt ist aus der Grundtaktfrequenz des Mikroprozessors 10 abgeleitet.

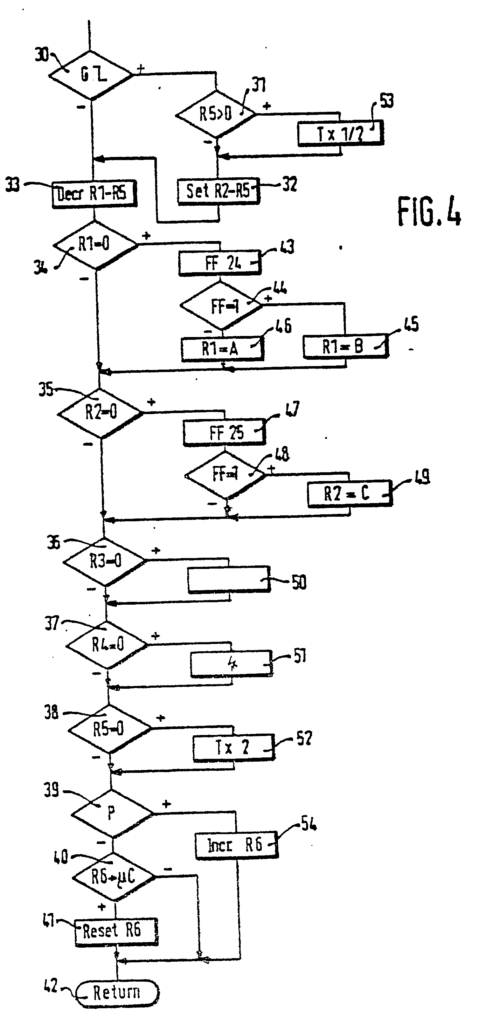

In Figur 3 ist der zeitliche Ablauf der Vorgänge dargestellt. Jedes Signal $U_{14}$ dient als Interrupt-Signal und unterbricht das laufende Programm (schraffiert dargestellt) für die Zeitdauer des Interrupt-Programms. Dieses, in Figur 4 näher dargestellte Interrupt-Programm dient der Dekrementierung bzw. Inkrementierung der Register 15 bis 21 und der daraus abgeleiteten Erzeugung der Ausgangssignale sowie Erfassung des Eingangssignals P. Nach Ablauf eines solchen Interrupt-Programms erfolgt der Rücksprung in das reguläre Programm, das der Errechnung der Daten für die Register in Abhängigkeit der Eingangsgrößen dient. Die Errechnung von Daten in Abhängigkeit von Eingangsgrößen ist für den Fall der Zündung im eingangs angegebenen Stand der Technik prinzipiell beschrieben und hier nicht näher ausgeführt, da diese Vorgänge nicht Gegenstand der vorliegenden Erfindung sind.

Durch das in Figur 4 dargestellte Flußdiagramm wird der Ablauf der parallelen Dekrementierung bzw. Inkrementierung der Register 15 bis 21 im Rahmen des Interrupt-Programms sowie die Erzeugung der Ausgangssignale und Erfassung des Eingangssignals.P näher erläutert. Dieser in Figur 4 dargestellte Ablauf wird mit jedem Interruptsignal $U_{14}$ durchlaufen. Liegt eine Rückflanke des Eingangssignals G vor 30, so wird zur Festlegung der Frequenz des Zeittaktgebers 14 zunächst abgefragt, ob der Inhalt des Registers 5 größer als ein vorgegebener Zahlenwert D ist 31. Ist dies nicht der Fall, so werden die Register $R_2$ bis $R_5$ auf vom Rechner vorgegebene Zahlenwerte gesetzt 32. Danach werden die Register $R_1$ bis $R_5$ um den Wert 1 dekrementiert 33. Danach wird abgefragt, ob die Register $R_1$ bis $R_5$ aufgrund dieser Dekrementierung den Wert Null erreicht haben 34 bis 38. Dies wird zu diesem Zeitpunkt nicht der Fall sein. Anschließend wird abgefragt, ob ein Signal P vorliegt 39 gemäß der Darstellung in Figur 2. Dies ist ebenfalls nicht der Fall, so daß weiterhin abgefragt wird, ob der Inhalt des Registers 6 bereits in den Mikroprozessor übernommen wurde 40. Wenn dies der Fall ist, wird das Register 6 zurückgesetzt 41 und zum Hauptprogramm zurückgekehrt 42. Dieses Hauptprogramm ist in Figur 3 schraffiert dargestellt.

Da beim nächsten Interrupt-Signal $U_{14}$ keine Rückflanke des Signals G mehr vorliegt, erfolgt der Durchlauf des Interrupt-Programms in den Schritten 30, 33 bis 42. Dieser Durchlauf erfolgt auf diese Weise unter jeweiliger Dekrementierung der Register $R_1$ bis $R_5$ solange, bis entweder eines der Register $R_1$ bis $R_5$ den Wert Null erreicht hat, oder bis ein Eingangssignal P erscheint. Im folgenden sollen nun diese verschiedenen Möglichkeiten nacheinander behandelt werden.

Das Register $R_1$ dient der Erzeugung eines taktverhältnis-gesteuerten, asynchronen Ausgangssignals für die Turbosteuerung. Hat das Register $R_1$ den Wert 0 erreicht 34, so wird das Flip-Flop 24 gekippt 43. Ist es danach gesetzt 44, so wird das Register 1 auf den Wert B vom Mikroprozessor aus gesetzt 45. Ist das Flip-Flop 24 dagegen nicht gesetzt, so wird dieses Register mit dem Wert A geladen 46. Durch dieses alternierende Setzen des Registers $R_1$ mit den Werten A und B wird die Pulslänge und Pausenlänge der Signalfolge $U_{11}$ festgelegt und kann praktisch beliebig variiert werden, was für den schraffierten Bereich von $U_{11}$ in Figur 2 dargestellt ist.

Das Register $R_2$ dient zur Erzeugung eines kurbelwinkelfesten Meßfensters $U_{12}$. Nach einem Signal G wurde dieses Register gesetzt 32. Erreicht nun dieses Register $R_2$ den Wert Null, so wird das Flip-Flop 25 gekippt 47. Da das Signal G zusätzlich als Rücksetzsignal für den Mikroprozessor 10 verwendet wird, befindet sich dieses Flip-Flop 25 nunmehr in gesetztem Zustand, der abgefragt wird 48. Das Register $R_2$ wird nunmehr vom Mikroprozessor auf den Wert C geladen 49. Das Dekrementieren dieses Werts C durch die folgenden Interrupt-Signale ergibt die Signallänge eines Signals $U_{12}$. Hier wird – wie beim Register $R_1$ – ein alternierendes Setzen des Registers mit zwei verschiedenen Werten praktiziert. Beim Register $R_2$ ist jedoch das Setzen des ersten Werts mit dem Gebersignal G synchronisiert, was beim Register $R_1$ nicht der Fall ist.

Die Register $R_3$ und $R_4$ dienen zur Festlegung des Steuersignals $U_{13}$ für die Zündspule einer Zündanlage. Erreicht das Register $R_3$ den Wert 0, so wird die Zündspule eingeschaltet 50. Erreicht das mit einem größeren Wert geladene Register $R_4$ den Wert 0, so wird die Spule wieder ausgeschaltet 51, wodurch die Zündung erfolgt. Das Register $R_3$ gibt somit den Signalbeginn und das Register $R_4$ das Signalende eines Signals $U_{13}$ vor.

Das Register $R_5$ dient zum einen der Drehzahlerfassung und steuert in Abhängigkeit davon die Frequenz des Zeittaktgebers 14 bzw. den Impulsabstand der Interrupt-Signale $U_{14}$. Dieses Register $R_5$ wird mit jeder Rückflanke eines Signals G auf einen festen Wert geladen, der im wesentlichen der Zahl der Interrupt-Signale zwischen zwei Rückflanken eines Signals G entspricht. Erreicht nun das Register $R_5$ den Wert Null, so bedeutet dies, daß der Impulsabstand zwischen zwei Interrupt-Signalen $U_{14}$ zu gering ist. Der Impulsabstand T wird daher verdoppelt 52. Ist dagegen bei einer Rückflanke eines Signals G der Inhalt von $R_5$ größer als ein vorgegebener Wert D 31, so wird entsprechend der Impulsabstand T halbiert 53. Aus dem verbleibenden Inhalt des Registers $R_5$ bei einer erneuten Rückflanke eines Signals G, der vorgegebenen Zahl, mit der dieses Register $R_5$ gesetzt wurde sowie aus dem Impulsabstand der Signale $U_{14}$ kann im Mikroprozessor 10 dann die absolute Drehzahl errechnet werden.

Die zeitliche Erfassung des Eingangssignals P erfolgt durch das Register $R_6$. Wird ein solches Signal P festgestellt 39, so wird bei jedem Durchlauf dieses Registers $R_6$ inkrementiert 54. Nach Beendigung eines solchen Signals P ist die Inkrementierung beendet, der erreichte Wert wird in den Mikroprozessor übernommen 40 und danach das Register $R_6$ wieder auf den Wert 0 gesetzt 41.

Es versteht sich, daß die erfindungsgemäße Idee nicht auf die hier beschriebenen erzeugten und erfaßten Signale beschränkt ist. Durch einen Mikroprozessor bzw. Mikrorechner können auf diese Weise beliebige, sich überschneidende, synchrone oder asynchrone Signale erzeugt und erfaßt werden. Neben der Anwendung zur Steuerung einer Brennkraftmaschine (Zündung und Einspritzung) kann im Kraftfahrzeug auch die Getriebesteuerung, Antiblockierfunktionen, Fahrinformationserfassung und sonstige Funktionen in einem oder in einer sehr geringen Zahl von Mikrorechnern realisiert werden. darüber hinaus ergeben sich auch interessante Anwendungen für Heizungssteuerungen, Werkzeugmaschinensteuerungen und komplizierte Überwachungssteuerungen.

**Patentansprüche**

1. Verfahren zur Steuerung einer Brennkraftmaschine mit einem Mikrorechner, wobei fahrzeug- und/oder brennkraftmaschinenspezifische Eingangssignale, wie Drehzahl- oder Bezugsmarkensignale, zu erfassen und verschiedene Ausgangssignale zur Steuerung der Brennkraftmaschine, wie Zünd-, Einspritz- oder Schließwinkelsignale, in Abhängigkeit von den Eingangssignalen auszugeben sind, und wobei diese Eingangs- und Ausgangssignale sich unregelmäßig überschneiden, mit dekrementierbaren oder inkrementierbaren Registern (15 bis 19, 21) zur Ablage von vom Mikrorechner aufgrund der Eingangssignale ermittelten Daten, dadurch gekennzeichnet, daß jedem der abzugebenden Ausgangssignale wenigstens eines der hierfür vorgesehenen Register (15 bis 18) zugeordnet wird, daß diese Register (15 bis 18) parallel durch Taktsignale ab den in diesen Registern (15 bis 18) abgelegten Werten nach deren Ablegung inkrementiert oder dekrementiert werden und daß beim Erreichen vorgegebener Registerwerke (CO) die Ausgangssignale zur Steuerung der Brennkraftmaschine ausgegeben werden.

2. Verfahren nach Anspruch 1, dadurch gekennzeichnet, daß die den Ausgangssignalen zugeordneten Register (15 bis 18) durch einen periodischen Steuerimpuls (G) auf den vom Mikrorechner (10) festgelegten Wert gesetzt werden.

3. Verfahren nach Anspruch 1 oder 2, dadurch gekennzeichnet, daß die Register (15, 16) jeweils bei Erreichen eines festgelegten Werts ihr entsprechendes Steuersignal abgeben und vom Mikrorechner (10) neu gesetzt werden.

4. Verfahren nach Anspruch 3, dadurch gekennzeichnet, daß die Register (15, 16) abwechselnd mit Werten zur Festlegung der Ausgangssignaldauer und der Ausgangssignalpause geladen werden.

5. Verfahren nach einem der vorhergehenden Ansprüche zur Erfassung der Zeitdauer von Eingangssignalen, dadurch gekennzeichnet, daß im Takt der Signale eines Zeittaktgebers (14) das Vorhandensein solcher Eingangssignale abgefragt wird und daß während des Vorliegens eines Eingangssignals zugeordnete Register (19, 21) durch diese Signale inkrementiert oder dekrementiert werden und daß beim Erreichen vorgegebener Werte Vorgänge in der Steuerung vorgenommen werden.

6. Verfahren nach Anspruch 5, dadurch gekennzeichnet, daß die Signale des Zeittaktgebers (14) zwischen zwei Steuerimpulsen (G) gezählt werden, und daß bei Über- bzw. Unterschreiten von Grenzwerten die Frequenz des Zeittaktgebers (14) verkleinert bzw. vergrößert wird.

7. Verfahren nach Anspruch 6, dadurch gekennzeichnet, daß die Verkleinerung bzw. Vergrößerung aus einer Halbierung bzw. Verdoppelung besteht.

8. Verfahren nach Anspruch 6 oder 7, dadurch gekennzeichnet, daß eine Höchstgrenze für die Frequenz des Zeittaktgebers vorgesehen ist.

9. Verfahren nach einem der Ansprüche 2 bis 8, dadurch gekennzeichnet, daß der periodische Steuerimpuls (G) eine Gebersignalflanke ist.

10. Verfahren nach Anspruch 9, dadurch gekennzeichnet, daß durch die Gebersignalflanke jeweils der Mikrorechner (10) resetiert wird.

**Claims**

1. Method for controlling an internal combustion engine by means of a microcomputer, in which vehicle- and/or internal combustion engine-specific input signals such as rotational speed or reference mark signals are to be acquired and various output signals for controlling the internal combustion engine such as ignition, injection or dwell angle signals are to be output in dependence on the input signals and in which method these input and output signals randomly overlap, comprising decrementable or incrementable registers (15 to 19, 21) for storing data determined by the microcomputer on the basis of the input signals, characterized in that each of the output signals to be emitted is associated with at least one register (15 to 18) provided for this purpose, that these registers (15 to 18) are incremented or decremented in parallel, starting from values stored in these registers (15 to 18) after they have been stored, and that, when predetermined register values (CO) are reached, the output signals for controlling the internal combustion engine are output.

2. Method according to Claim 1, characterized in that the registers (15 to 18) associated with the output signals are set to the value established by the microcomputer (10) by means of a periodic control pulse (G).

3. Method according to Claim 1 or 2, characterized in that the registers (15, 16) emit their corresponding control signal and are reset by the microcomputer (10) each time they reach a predetermined value.

4. Method according to Claim 3, characterized in that the registers (15, 16) are alternately loaded with values for defining the output signal duration and the output signal gap.

5. Method according to one of the preceding claims for detecting the duration of input signals, characterized in that the existence of such input signals is interrogated in synchronism with the signals of a timing clock generator (14) and that, during the presence of an input signal, associated registers (19, 21) are incremented or decremented by these signals and that, when predetermined values are reached, processes in the control systems are carried out.

6. Method according to Claim 5, characterized in that the signals of the timing clock generator (14) are counted between two control pulses (G) and that, if the count exceeds or drops below limit values, the frequency of the timing clock generator (14) is reduced or increased.

7. Method according to Claim 6, characterized in that the reducing or increasing consists of a halving or doubling, respectively.

8. Method according to Claim 6 or 7, characterized in that a maximum limit is provided for the frequency of the timing clock generator.

9. Method according to one of claims 2 to 8, characterized in that the periodic control pulse (G) is a generator signal edge.

10. Method according to Claim 9, characterized in that the microcomputer (10) is in each case reset by the generator signal edge.

**Revendications**

1. Procédé de commande d'un moteur à combustion interne à l'aide d'un microcalculateur avec saisie de signaux d'entrée caractéristiques du véhicule et/ou du moteur à combustion interne ainsi que les signaux de vitesse de rotation et de repère et émissions de différents signaux de sortie pour commander le moteur à combustion interne tel que les signaux d'angle d'allumage d'injection ou de fermeture en fonction des signaux d'entrée, ces signaux d'entrée et de sortie se recoupant irrégulièrement, à l'aide de registres (15 à 19, 21) susceptibles d'être décrémentés ou incrémentés pour recevoir les données déterminées par le microcalculateur à partir des signaux d'entrée, procédé caractérisé en ce qu'à chaque signal de sortie à émettre est associé au moins un registre (15–18) prévu à cet effet, les registres (15–18) étant incrémentés ou décrémentés en parallèle par des signaux de cadence et en partant des grandeurs déposées dans ces registres (15–18) et après leur dépôt et en ce que lorsqu'on atteint des valeurs prédéterminées dans les registres (CO), on émet les signaux de sortie pour commander le moteur à combustion interne.

2. Procédé selon la revendication 1, caractérisé en ce que les registres (15–18) associés aux signaux de sortie sont mis à l'état par une impulsion de commande périodique (G) à une valeur fixée par le microcalculateur (10).

3. Procédé selon la revendication 1 ou 2, caractérisé en ce que chaque fois que les registres (15, 16) atteignent une valeur fixe ils émettent leur signal de commande correspondant et sont de nouveau remis à l'état par le microcalculateur (10).

4. Procédé selon la revendication 3, caractérisé en ce que les registres (15, 16) sont chargés en alternance par des grandeurs fixant la durée du signal de sortie et la pause du signal de sortie.

5. Procédé selon l'une des revendications précédentes pour saisir la durée des signaux d'entrée, procédé caractérisé en ce qu'à la cadence des signaux fournis par un générateur d'horloge (14) on demande la présence de tels signaux d'entrée et en ce que pendant la présence d'un signal d'entrée, les registres (19–21) correspondants sont incrémentés ou décrémentés par ces signaux et lorsqu'ils atteignent une valeur prédéterminée on effectue les opérations de commande.

6. Procédé selon la revendication 5, caractérisé en ce que les signaux du générateur d'horloge (14) sont comptés entre deux impulsions de commande (G) et en ce que lorsqu'on dépasse vers le haut ou vers le bas des valeurs limites, on diminue ou on augmente la fréquence du générateur de temps (14).

7. Procédé selon la revendication 6, caractérisé en ce que la réduction ou l'augmentation consiste à diminuer de moitié ou à doubler.

8. Procédé selon la revendication 6 ou 7, caractérisé en ce qu'on a une limite maximale pour la fréquence du générateur d'horloge.

9. Procédé selon l'une des revendications 2 à 8, caractérisé en ce que l'impulsion de commande périodique (G) est un flanc du signal du générateur.

10. Procédé selon la revendication 9, caractérisé en ce que le flanc du signal du générateur remet chaque fois à l'état initial le microcalculateur (10).

FIG.1

FIG.2

FIG.3

FIG.4